# EUROPÄISCHE PATENTANMELDUNG

(11) **EP 0 621 238 A2**
(43) Veröffentlichungstag der Anmeldung: **26.10.1994**
(21) Anmeldenummer: 94102541.3
(22) Anmeldetag: 19.02.1994
(51) Int. Cl.: C02F 1/42, B01J 49/00

(54) **Kleinentsalzungsanlage auf Ionenaustauscherbasis mit elektrolytisch herstellbaren Regeneriermitteln und Verfahren zu deren Betrieb**

(30) Priorität: 17.04.1993 DE 4312600
(71) Anmelder: Judo Wasseraufbereitung GmbH, D-71364 Winnenden (DE)
(72) Erfinder: Söcknick, Ralf Dr., D-70806 Kornwestheim (DE); Schuler, Hansjörg, D-71522 Backnang - Waldrems (DE)
(74) Vertreter: KOHLER SCHMID + PARTNER

(57) **Zusammenfassung**

Bei einer Klein-Anlage zur Erzeugung von vollentsalztem (VE-)Wasser in einer Volumenmenge von etwa 20 m³/Woche, vorzugsweise weniger als 5 m³/Woche, die jeweils mindestens einen harzgefüllten Kationenaustauscherbehälter und einen harzgefüllten Anionenaustauscherbehälter aufweist, wobei eine Einrichtung zum Regenerieren des Kationenaustauscherharzes mit einer Säure und des Anionenaustauscherharzes mit einer Lauge vorgesehen ist, enthält die Einrichtung zum Regenerieren der Ionenaustauscherharze (36, 42) eine Elektrolysezelle (3), in der durch elektrolytische Aufspaltung von Salzsole (17) gleichzeitig die zum Regenerieren benötigte Säure (19) und Lauge (18) hergestellt werden kann. Damit steht eine regenerierbare Vollentsalzungsanlage für kleine Bedarfsfälle zur Verfügung, bei der mit einfachen technischen Mitteln, geringstmöglichem Steuerungsaufwand und auf kostengünstige Weise die benötigten Regeneriermittel vor Ort in einem geschlossenen System hergestellt werden können.

## Beschreibung

Die Erfindung betrifft eine Klein-Anlage zur Erzeugung von vollentsalztem (VE-)Wasser in einer Volumenmenge von etwa 20 m³/Woche, vorzugsweise weniger als 5 m³/Woche, die jeweils mindestens einen harzgefüllten Kationenaustauscherbehälter und einen harzgefüllten Anionenaustauscherbehälter aufweist, wobei eine Einrichtung zum Regenerieren des Kationenaustauscherharzes mit einer Säure und des Anionenaustauscherharzes mit einer Lauge vorgesehen ist.

Eine derartige Klein-Entsalzungsanlage ist beispielsweise bekannt aus dem Firmenprospekt "JUDO-Preisliste 93" der Firma JUDO Wasseraufbereitung GmbH von Januar 1993.

Es besteht ein Bedarf an voll- oder teilentsalztem Wasser für viele Einsatzfälle in Industrie, Handel und Gewerbe. Insbesondere für kleinere Bedarfsfälle wie z.B. Apotheken, gewerbliche Geschirrspülmaschinen, Labors etc. werden Verfahren sowie Vorrichtungen benötigt, mit deren Hilfe entsalztes Wasser nicht nur auf der Basis eines Ionenaustausches hergestellt werden kann, sondern mit denen auch die hierfür erforderliche Ionenaustauschervorrichtung mit technisch einfachen Mitteln und auf kostengünstige Weise vor Ort regeneriert werden kann.

Großtechnisch wird z.B. in Kraftwerken, die als Kühlwasser, Kesselspeisewasser etc. große Mengen an entsalztem Wasser benötigen, dieses Wasser in der Regel mit Ionenaustauscheranlagen hergestellt. Diese Anlagen bestehen aus mindestens einem Anionenaustauscher und einem Kationenaustauscher. Der Anionenaustauscher wird, nachdem er erschöpft ist, mit einer Lauge (z.B. NaOH) regeneriert. Der Kationenaustauscher wird nach seiner Erschöpfung mit Säure (z.B. HCl oder H₂SO₄) regeneriert. Im Betriebszustand tauscht dann der Kationenaustauscher die im Rohwasser enthaltenen Kationen gegen H⁺-Ionen und der Anionenaustauscher die im Rohwasser enthaltenen Anionen gegen OH⁻-Ionen. Die H⁺- und die OH⁻-Ionen verbinden sich nach diesem Austauschvorgang zu Wasser (H₂O). Das behandelte Wasser ist entsalzt. Alternativ hierzu sind auch sogenannte Mischbettfilter im Einsatz. In ihnen findet ein Gemisch von Anionen- und Kationenaustauschermaterial Anwendung. Man benötigt hierbei für den Entsalzungsvorgang nur einen Behälter. Die Regeneration der Ionenaustauschermaterialien ist jedoch wesentlich aufwendiger, da Anionen- und Kationenaustauschermaterial vor der Regeneration getrennt und danach wieder vermischt werden müssen.

Eine relativ neue, in der Praxis aufgrund des enormen technischen Aufwandes bisher jedoch kaum realisierte Möglichkeit besteht darin, die zur Regeneration erforderliche Säure und Lauge mit Hilfe einer Elektrolysezelle durch eine Salzspaltung auf elektrischem Wege zu erzeugen. Die Besonderheit liegt hierbei in der Tatsache, daß nicht die relativ gefährlichen Säuren und Laugen als Regenerierchemikalien transportiert, gelagert und gehandhabt werden müssen, sondern lediglich Salz in fester Form.

Elektrolysezellen zur Herstellung von Säuren aus ihren Salzen oder umgekehrt sind insbesondere im Rahmen der Wertstoffrückgewinnung bzw. Abwasserbehandlung bekannt (DE 39 26 634 A1, DE 39 26 642 A1). Ein Verfahren zur elektrochemischen Spaltung von Alkalisulfaten wird in der EP 0 449 071 A1 und eine Methode zur Herstellung von Säure und Lauge aus einer wässrigen Salzlösung in der EP 0 221 751 A1 vorgeschlagen.

Vollentsalzungsanlagen, bei denen Elektrolysezellen zur Erzeugung der Regeneriermittel eingesetzt werden, sind wegen des hohen technischen Aufwands und der inhibitiv hohen Kosten allerdings bisher nur in großtechnischen Anwendungen wie z.B. der Anwendung zur Entsalzung von zirkulierendem Kondensatwasser beim Antrieb von Dampfturbinen oder in Kraftwerken bekannt, wo eine präzise Anlagenüberwachung sowie regelmäßige Wartungsarbeiten möglich sind (siehe z.B. EP 0 249 925 B1). Diese Elektrolysezelle erfordert jedoch die Verwendung von sogenannten bipolaren Membranen. Ausschließlich bei großtechnischen Einsatzmöglichkeiten gelten die bekannten Anlagen, die in ihren kleinsten Ausführungen immerhin noch 2 m³ Säure und Lauge pro Tag produzieren (siehe z.B. Firmenprospekt des AQUATECH der Firma Allied Signal Inc. von 1985), als ökonomisch attraktiv, da diese Membranart sehr teuer ist und darüberhinaus auf chemische und thermische Belastungen sehr empfindlich reagiert. Bei diesen Großanlagen fällt dann auch der Steuerungsaufwand für derartige Regenerationseinheiten nicht sonderlich ins Gewicht.

Für kleinere Elektrolysezellen z.B. für die Regeneriermittelherstellung für Entsalzungsanlagen auf Ionenaustauscherbasis im Gewerbe, Handel oder Handwerk, ist eine einfachere, robustere und preiswertere Vorrichtung erforderlich.

Zwar ist in anderen Bereichen der Technik die Herstellung von Säure und Lauge durch elektrolytische Salzzerlegung auch in kleineren Geräteeinheiten bekannt (siehe z.B. Firmenprospekt der Firma Berghof GmbH, "BEL 500 Elektrodialyse Laborgerät") jedoch werden derartige Klein-Elektrolysegeräte lediglich im Laborbereich zur bequemeren Erzeugung von Chemikalien angewendet. Für die Herstellung von Regenerationsmitteln zum Regenerieren von Ionenaustauschereinheiten wären die Geräte viel zu aufwendig und inhibitiv teuer.

Ein weiterer Anwendungsfall für entsalztes Wasser ist der Betrieb von Klimaanlagen. In der Regel wird der für Klimaanlagen erforderliche, annähernd konstante Volumenstrom mit Hilfe von kleineren Umkehrosmoseanlagen erzeugt. Diesen Anlagen muß jedoch eine Enthärtungsanlage vorgeschaltet werden, um das Umkehrosmosemembrandmodul vor dem Verkalken zu schützen.

Der Bedarf an entsalztem Wasser wird in Labors entweder mit Umkehrosmoseanlagen gedeckt (s.o.), die jedoch zumeist einen nachgeschalteten Speichertank für das aufbereitete Wasser benötigen, um kurzzeitige Bedarfsspitzen abdecken zu können. Übliche Umkehrosmoseanlagen für derartige Einsatzfälle liefern selten mehr als 100 - 200 l/h Produktwasser.

Für einen kleineren Bedarf werden im Laborbereich auch sogenannte Patronenfilter verwendet. Dies sind Mischbettionenaustauscheranlagen mit lediglich einem Rohwasserzulauf, einem Behälter, welcher das Gemisch aus Anionen- und Kationenaustauschermaterial aufnimmt sowie einem Produktwasserablauf. Zumeist vervollständigt eine Einrichtung zur Leitfähigkeitsmessung für die Produktwasserüberwachung die Vorrichtung. Ist das Ionenaustauschermaterial erschöpft, so wird der Behälter gegen einen neuen ausgetauscht, der regeneriertes Ionenaustauschermaterial enthält. Der Behälter mit dem erschöpften Ionenaustauschermaterial wird z.B. zum Hersteller als Tauschpatrone zurückgeschickt, dort regeneriert und anschließend wieder eingesetzt.

Derartige Patronenfilter werden z.B. auch vor gewerblichen (Gläser-) Spülmaschinen, in Apotheken etc. eingesetzt.

Für die zuletzt genannten Kleinanlagen ist die im Kraftwerksbereich eingesetzte Ionenaustauschertechnik aufgrund ihrer relativ gefährlichen Regenerierchemikalien (Säuren und Laugen), die bevorratet und gehandhabt werden müssen, in der Regel nicht akzeptabel. Die Regeneration mit aus der elektrischen Salzspaltung hergestellten Säuren und Laugen war bisher auch keine Alternative, da die derzeit bekannten Verfahren und Vorrichtungen, wie bereits erwähnt, einen erheblichen Steuerungs-, Investitions- und Bedienungsaufwand erfordern. Hinzu kommt, daß die bisher für die elektrolytische Salzspaltung vorgeschlagenen bipolaren Membranen teuer und empfindlich sowie nicht allgemein verfügbar sind.

Die für den Betrieb von Klimaanlagen häufig verwendeten Umkehrosmoseanlagen ermöglichen lediglich eine geringe Spitzenentnahme (ca. 100 - 200 l/h) und benötigen zum Schutz der Umkehrosmosemembrane auch noch eine vorgeschaltete Enthärtung des Rohwassers. Diese Enthärtung bedingt wiederum eine Regeneration des hierzu verwendeten Ionenaustauschers in der Regel mit Natriumchlorid (NaCl). Das an und für sich wenig umweltbelastende Osmoseverfahren verliert durch diesen doppelten technischen Aufwand (Umkehrosmoseanlage und automatisch regenerierende Enthärtungsanlage) sowie durch den Bedarf an Regenerierchemikalien viel von seiner Umweltfreundlichkeit.

Für den Einsatz in Labors werdenebenfalls häufig Umkehrosmoseanlagen verwendet, hier jedoch zumeist mit einem nachgeschalteten aufwendigen Speichertank mit Füllstandsmeßtechnik und Förderpumpe, um auch kurzzeitige Bedarfsspitzen abdecken zu können.

Die in Labors wie auch vor gewerblichen Gläserspülmaschinen häufig verwendeten Patronenfilter zeichnen sich zwar durch einen einfachen Anlagenaufbau aus und ermöglichen auch höhere Spitzendurchflüsse, sie erfordern jedoch einen immensen logistischen Aufwand, bedingt durch die zentrale Regeneration der in den Patronen eingesetzten Ionenaustauschermittel. Die Patronen müssen gelagert, verpackt, verschickt sowie transportiert werden. Bei Frostgefahr muß dem erschöpften Ionenaustauschermaterial sogar Kochsalz als Frostschutzmittel beigefügt werden.

Aufgabe der vorliegenden Erfindung ist es demgegenüber, ein Verfahren sowie eine Vorrichtung zur Herstellung von Säure und Lauge vorzustellen, mit deren Hilfe Ionenaustauscher regeneriert werden können, die zur Herstellung von entsalztem Wasser für kleine Bedarfsfälle eingesetzt werden. Dieses Verfahren bzw. die Vorrichtung sollen sich dadurch auszeichnen, daß die Regeneriermittel mit einfachen technischen Mitteln, geringem Steuerungsaufwand und auf kostengünstige Weise vor Ort hergestellt werden können.

Erfindungsgemäß wird diese Aufgabe dadurch gelöst, daß die Einrichtung zum Regenerieren der Ionenaustauscherharze eine Elektrolysezelle enthält, in der durch elektrolytische Aufspaltung von Salzsole gleichzeitig die zum Regenerieren benötigte Säure und Lauge hergestellt werden kann. Entgegen dem bisher vorherrschenden Vorurteil läßt sich eine derartige Elektrolysezelle auch ohne großen Steuerungsaufwand in einer kompakten Klein-Anlage mit technisch einfachen Mitteln betreiben. Dadurch kann mit Hilfe des elektrischen Stromes elektrolytisch Salz an Ort und Stelle zur Herstellung der für die Regeneration der Ionenaustauscherharze benötigten Säure und Lauge aufgespalten werden.

Bei einer besonders bevorzugten Ausführungsform der erfindungsgemäßen Klein-Entsalzungsanlage weist die Elektrolysezelle eine Soleabführungsleitung zum Abführen von in der Zelle behandelter Salzsole sowie eine Solezufuhrleitung zum Zuführen von frischer Salzsole in die Zelle auf, wobei die Soleabführungsleitung mit der Solezufuhrleitung über eine Einrichtung zur Nachschärfung der Salzsole verbunden ist, in der die Konzentration der in die Solezufuhrleitung eingeleiteten Salzsole auf einem bestimmten, vorzugsweise vorgebbaren Wert gehalten werden kann. Da bei der elektrolytischen Salzaufspaltung die durch die Elektrolysezelle geleitete Salzsole ständig verdünnt wird, muß das durch Aufspaltung entzogene Salz bei der zugeführten Sole wieder zugegeben werden, damit eine Mindestleitfähigkeit der durch die Elektrolysezelle geleiteten Salzsole gewährleistet bleibt.

Dies läßt sich auf technisch besonders einfache Weise dadurch erreichen, daß die Einrichtung zur Nachschärfung der Salzsole einen Solebehälter umfaßt, in den einerseits die Soleabführungsleitung, andererseits die Solezufuhrleitung mündet, und in dem Feststoffsalz derart angeordnet ist, daß die aus der Elektrolysezelle durch die Soleabführungsleitung in den Solebehälter eingeleitete, geringfügig verarmte Salzsole mit dem Feststoffsalz in Berührung kommt und mit einer höheren Salzkonzentration den Solebehälter über die Solezufuhrleitung verlassen kann.

Bei einer anderen Ausführungsform wird dies dadurch erreicht, daß die Soleabführungsleitung direkt in die Solezufuhrleitung mündet, und daß die Einrichtung zur Nachschärfung der Salzsole einen Solebehälter mit konzentrierter Salzsole umfaßt, aus dem über eine Zuflußleitung ständig eine bestimmte Menge konzentrierter Salzsole in die Solezufuhrleitung einfließen kann. Der Zufluß der konzentrierten Salzsole kann auch über Diffusionsvorgänge aufgrund der Konzentrationsunterschiede erreicht werden.

Ebenfalls besonders bevorzugt ist eine Ausführungsform der erfindungsgemäßen Klein-Entsalzungsanlage, bei der die Einrichtung zum Regenerieren der Ionenaustauscherharze einen Säurebehälter und einen Laugenbehälter aufweist, in die angereicherte Säure bzw. Lauge aus der Elektrolysezelle eingeleitet und aus denen weiter anzureichernde Säure bzw. Lauge in die Elektrolysezelle abgeführt werden können, wobei der Säurebehälter und der Laugenbehälter jeweils eine Ablaßleitung aufweisen, durch die eine Verbindung zum Kationenaustauscherbehälter bzw. zum Anionenaustauscherbehälter hergestellt werden kann, und wobei die Ablaßleitungen so angeordnet sind, daß beim Ablassen von Säure bzw. Lauge jeweils eine bestimmte Restmenge zwangsweise im Säurebehälter bzw. im Laugenbehälter zurückbleibt.

Auf diese Weise wird sichergestellt, daß beim Anlaufen der Elektrolysezelle nicht Wasser in die entsprechenden Kammern eingeleitet wird, sondern zumindest verdünnte Säure und Lauge, die eine gewisse Mindestleitfähigkeit aufweisen. Diese endliche Anfangsleitfähigkeit bei jeweils erneuter Betriebsaufnahme der Zelle garantiert, daß bei keinem Betriebszeitpunkt die Leitfähigkeit in der Zelle vollständig zusammenbricht, was die Effektivität enorm herabsetzen würde und sehr hohe Spannungswerte zwischen den Elektroden der Elektrolysezelle zum Anlaufen des Salzaufspaltungsprozesses erforderlich machen würde.

Besonders einfach kann ein Verbleiben der definierten Restmenge dadurch sichergestellt werden, daß die Ablaßleitungen jeweils mit vertikalem Abstand vom Behälterboden des Säure- bzw. Laugenbehälters angeordnet sind.

Bei einer anderen Weiterbildung dieser Ausführungsform sind im Bereich des Behälterbodens des Säure- und des Laugenbehälters nicht-entleerbare Vertiefungen angebracht, die das gleiche bewirken.

Bei einer weiteren bevorzugten Ausführungsform ist in der Einrichtung zum Regenerieren der Ionenaustauscherharze eine Meßvorrichtung zur Messung der Konzentration der in der Elektrolysezelle erzeugten bzw. angereicherten Säure und/oder Lauge vorzugsweise aufgrund der elektrischen Leitfähigkeit vorgesehen.

Bei einer vorteilhaften Weiterbildung dieser Ausführungsform kann eine elektronische Steuereinrichtung vorgesehen sein, die aufgrund der Meßsignale der Meßvorrichtungen bei Erreichen eines vorgebbaren Konzentrationswertes der Säure und/oder Lauge ein Umpumpen der Salzsole, Säure und Lauge durch die Elektrolysezelle abstoppt.

Die Elektrolysezelle kann bei einer besonders einfachen Ausführungsform so angeordnet sein, daß nach dem Abstoppen des Umpumpens der Salzsole, Säure und Lauge eine oder mehrere der verschiedenen Flüssigkeiten, vorzugsweise jedoch alle aus der Elektrolysezelle in die entsprechenden Zufuhrleitungen ablaufen. Dadurch wird sichergestellt, daß keine gegenseitigen Verunreinigungen der in der Zelle stehenden, durch Ionenaustauschermembranen getrennten konzentrierten Flüssigkeiten durch Diffusionsvorgänge erfolgen können.

Bevorzugt ist auch eine Ausführungsform, bei der ein Feststoffkatalysator vorgesehen ist, dem die bei der Salzaufspaltung in der Elektrolysezelle an den Elektroden entstehenden Wasserstoff- und Sauerstoffgase zur katalytischen Verbrennung zugeführt werden können. Dadurch wird die Bildung eines gefährlichen Knallgasgemisches zuverlässig verhindert.

Bei einer weiteren besonders bevorzugten Ausführungsform sind am Boden der Kationenaustauscherbehälter und der Anionenaustauscherbehälter Abflußleitungen vorgesehen, durch die nach dem Regenerieren der Ionenaustauscherharze die verbrauchte Säure bzw. Lauge abfließen kann, wobei sämtliche Abflußleitungen zusammengeführt sind. Wegen der gleichzeitigen Herstellung und Einleitung von Säure und Lauge, die zwangsläufig in der Elektrolysezelle in gleichen Konzentrationen entstehen, wird in der Bilanz nach dem Zusammenführen der verbrauchten Regeneriermittel eine Neutralisation erreicht.

Bei einer bevorzugten Weiterbildung münden die Ausflußleitungen in eine gemeinsame Leitung größeren Querschnitts oder in einen Pufferbehälter, so daß eine Vermischung und Neutralisierung der abfließenden Regeneriermittel sichergestellt ist.

Bei einer besonders bevorzugten Ausführungsform der erfindungsgemäßen Anlage ist vorgesehen, daß die Elektrolysezelle Ionenaustauschermembranen aufweist, die die Elektrolysezelle in 4 separate Kammern trennen, wobei eine der Kammern eine mit einem Elektrolyten gefüllte Anodenkammer ist, von einer ihr benachbarten Säurekammer, in der Produktsäure aufkonzentriert wird, durch eine Kationenaustauschermembrane getrennt ist und diese Säurekammer auf ihrer anderen Seite mit einer Anionenaustauschermembrane von einer an sie angrenzenden Solekammer, die von der das zu spaltende Salz enthaltenden Lösung durchströmt wird, getrennt ist, wobei die Solekammer wiederum auf ihrer anderen Seite durch eine Kationenaustauschermembrane von einer Kathodenkammer getrennt ist, in der Produktlauge aufkonzentriert wird. Eine solche Elektrolysezelle ist an sich bekannt aus der US 3,086,928 A1. Ein derart einfacher und robuster Aufbau der Elektrolysezelle, die das Herzstück der erfindungsgemäßen Anlage darstellt, trägt zu einer erheblich höheren Betriebssicherheit sowie zu wesentlich niedrigeren Herstellungskosten der Anlage bei.

Bei einer Weiterbildung dieser bevorzugten Ausführungsform ist die Leitfähigkeit der Lösungen in den einzelnen Kammern der Elektrolysezelle so gut, daß auf die Einbringung von Ionenaustauscherharz in eine oder mehrere Kammern zur Leitfähigkeitsverbesserung verzichtet werden kann. Bei einer alternativen Weiterbildung ist dagegen die Einbringung von Ionenaustauscherharz in die Kammern zur Leitfähigkeitsverbesserung möglich.

Um die Betriebssicherheit der Elektrolysezelle zu erhöhen, ist bei einer bevorzugten Weiterbildung vorgesehen, daß die Anodenkammer und die Kathodenkammer eine Entlüftungsvorrichtung für das als Elektrodenreakton bei der Wasserspaltung entstehende Wasserstoff- und Sauerstoffgas aufweisen, diese Entlüftungsvorrichtungen jedoch auch im Anodenkreis bzw. im Laugenkreis integriert sein können.

Besonders günstig erweist sich eine Ausführungsform, bei der die Anode aus platiniertem Titan-Material, insbesondere einem platiniertem Titandraht besteht.

Bei einer weiteren Ausführungsform begrenzen Rähmchen, welche als Abstandshalter für die Membranen dienen und somit die Zellenkammern nach außen hin begrenzen, einen rechteckigen Raum. Alternativ dazu können die Rähmchen aber auch einen zylindrischen Raum begrenzen.

Bevorzugt ist eine Ausführungsform, bei der die Zu- und Ableitungen der einzelnen Kammern in den Rähmchen integriert sind.

In den Rahmen der Erfindung fällt auch ein Verfahren zum Betrieb der oben beschriebenen Klein-Entsalzungsanlage, bei dem die der Elektrolysezelle zugeführte Salzsole auf einer wenigstens annähernd konstanten Konzentration gehalten wird. Dies kann, wie oben geschildert, dadurch erreicht werden, daß die die Elektrolysezelle verlassende, geringfügig verarmte Salzlösung über einen Feststoffsalzvorrat geleitet wird und mit einer höheren Zulaufkonzentratlon der Elektrolysezelle wieder zugeführt wird. Eine andere Möglichkeit der Konzentrationsanhebung besteht darin, daß die verarmte Salzlösung aus der Elektrolysezelle über Diffusionsvorgänge mit konzentrierteren Salzlösungen in Verbindung gebracht wird, so daß ihr Salzgehalt ebenfalls wieder angereichert wird, bevor sie erneut in die Elektrolysezelle eingeleitet wird.

Bei einer besonders bevorzugten Verfahrensvariante ist vorgesehen, daß die in der Einrichtung zum Regenerieren der Ionenaustauscherharze erzeugte Säure und Lauge beim Durchführen einer Regeneration jeweils nur zum Teil durch die Harze geleitet wird, während eine bestimmte Restvolumenmenge an Säure und Lauge in der Einrichtung verbleibt.

Dadurch kann die Leitfähigkeit im Säuren- und Laugenkreis auch bereits zu Beginn der Regeneriermittelherstellung auf einem bestimmten Mindestniveau gehalten werden, da eine definierte Restmenge an Säure und Lauge von der vorherigen Regeneriermittelherstellungsphase immer zurückbehalten wird und somit zur Leitfähigkeltserhöhung des Nachspeisewassers dient, wobei diese Restmenge nicht über eine Meß- und Steuerungsvorrichtung, sondern über die geometrische Ausführung der im Säure- bzw. Laugenkreis integrierten Behälter realisiert werden kann.

Vorzugsweise wird bei Erreichen einer vorgegebenen Sollkonzentration der in der Elektrolysezelle erzeugten Säure und/oder Lauge die Elektrolysezelle von einem Teil der verschiedenen Flüssigkeiten, vorzugsweise jedoch von sämtlichen Flüssigkeiten entleert, damit keine gegenseitigen Verunreinigungen von in der Elektrolysezelle stehenden konzentrierten Flüssigkeiten erfolgen.

Ebenfalls vorteilhaft ist eine Betriebsweise, bei der das bei der Salzaufspaltung in der Elektrolysezelle entstehende Wasserstoff- und Sauerstoffgas katalytisch verbrannt wird, so daß kein gefährliches Knallgasgemisch entstehen kann.

Schließlich ist auch eine Verfahrensvariante besonders vorteilhaft, bei der die Regeneration des Kationenaustauscherharzes und des Anionenaustauscherharzes gleichzeitig und mit Säure und Lauge von gleicher Konzentration durchgeführt wird, wobei die verbrauchten Regeneriermittel nach Durchlaufen durch die Harze zusammengeführt und vermischt werden.

Auf diese Weise kann besonders einfach eine Neutralisation der Regeneriermittelabfälle sichergestellt werden.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln, für sich oder zu mehreren in beliebigen Kombinationen Anwendung finden. Es zeigen:
- Fig. 1: ein Funktionsschema einer bevorzugten Ausführungsform der erfindungsgemäßen Anlage;
- Fig. 2: den schematischen Aufbau und ein Funktionsschema einer besonders bevorzugt eingesetzten Elektrolysezellen;
- Fig. 3: eine Explosionsdarstellung von als Abstandshalter für die Membranen der Elektrolysezelle dienenden Rähmchen mit
a) rechteckigem
b) rundem Querschnitt; und
- Fig. 4: einen schematischen Querschnitt durch ein rechteckiges Abstandshalter-Rähmchen mit integrierten Zu- und Ableitungen.

Das Herzstück der Vorrichtung zur Herstellung der Regeneriermittel ist eine Elektrolysezelle mit mehreren Kammern. Darin erfolgt die Salzspaltung sowie die Spaltung von Wasser in H⁺- und OH⁻-Ionen.

Die in den einzelnen Kammern befindlichen Lösungen müssen zweckmäßigerweise umgewälzt werden, so daß sich an den die Kammern trennenden Ionenaustauschermembranen keine überhöhten Konzentrationen einzelner Ionenarten einstellen. Die das zu spaltende Salz enthaltende Lösung verarmt mit der Zeit, so daß Salz nachgespeist werden muß. In der vorliegenden Erfindung wird dies dadurch realisiert, indem die nach einem Durchlauf durch die Elektrolysezelle verarmte Salzlösung online direkt oder indirekt mit Feststoffsalz in Kontakt gebracht wird.

Um eine gute Leitfähigkeit der verschiedenen Lösungen in den Kammern zu erreichen, wird dafür gesorgt, daß deren Konzentration nie unter ein bestimmtes Minimum absinkt. Dies erreicht man bei den hergestellten Regenerierchemikalien dadurch, daß die im Zirkulationskreis integrierten Vorratsbehälter auch beim Ablassen der fertigen Regenerierlösungen nie ganz entleert werden können. Das nach dem Ablassen der Regenerierlösungen zum Wiederauffüllen dieser Vorratsbehälter nachgespeiste, salzarme Wasser vermischt sich mit diesen Regeneriermittelresten, wodurch die o.g. Mindestleitfähigkeit zu Beginn der Regeneriermittelherstellung realisiert wird.

Die Herstellung von Säure und Lauge erfolgt bevorzugt gleichzeitig und in ein und derselben Zelle. Die erforderliche Endkonzentration ist erreicht, wenn im Laugenkreis eine bestimmte Mindestleitfähigkeit erreicht ist. Dann wird der elektrische Strom sowohl für die Elektroden als auch für den Pumpenantrieb abgeschaltet und zumindest ein Teil der Elektrolysezellenkammern läuft leer, wodurch eine Rückdiffusion, d.h. ein Konzentrationsausgleich durch die Ionenaustauschermembrane hindurch, zuverlässig verhindert wird.

Bei der Elektrolyse von wässrigen Lösungen entsteht an den Elektroden in der Regel durch Wasserspaltung Sauerstoff- und Wasserstoffgas. Diese Gase (Sauerstoff entsteht an der Anode und Wasserstoff an der Kathode) bilden zusammen ein hochexplosives Knallgasgemisch. Dieses sollte aus Sicherheitsgründen unschädlich gemacht werden. Bevorzugterweise erfolgt dies mit Hilfe eines geeigneten Feststoffkatalysators, durch den das Gasgemisch hindurchgeleitet wird, wodurch die beiden Komponenten zu Wasser (H₂O) reagieren.

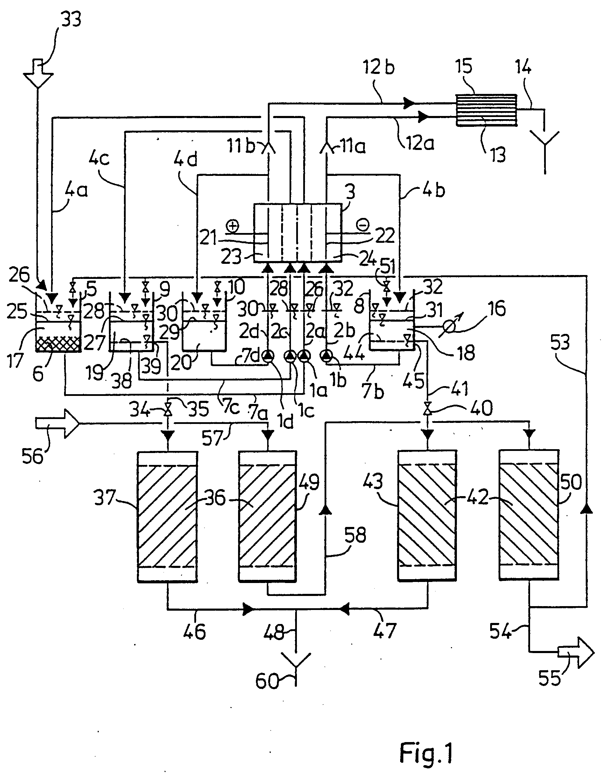

Eine besonders bevorzugte Ausführungsform ist in der Figur 1 dargestellt. Eine Salzlösung 17 wird mit einer Pumpe 1a über eine Solezufuhr 2a in eine Elektrolysezelle 3 geleitet. Dort wird ein kleiner Teil des in der Lösung enthaltenen Salzes (besonders bevorzugt NaCl) gespalten. Die hierdurch etwas verarmte Salzlösung verläßt die Zelle über eine Soleabführungsleitung 4a und wird einem Solebehälter 5 zugeführt. Die Lösung strömt langsam durch diesen Behälter hindurch und kommt dabei mit dem im Solebehälter 5 bevorrateten Feststoffsalz 6 in Kontakt. Die wieder aufkonzentrierte und besonders bevorzugt gesättigte oder nahezu gesättigte Lösung wird über eine Leitung 7a von der Pumpe 1a angesaugt. Parallel hierzu wird je nach Beobachtungszeitpunkt eine mehr oder weniger konzentrierte Lauge 18, vorzugsweise Natronlauge mit Hilfe einer Pumpe 1b über eine Leitung 2b durch die Elektrolysezelle 3 gefördert. Beim Durchgang durch die Zelle wird die Lauge in der Lösung etwas angereichert. Diese angereicherte Lösung verläßt die Zelle und wird einem Laugenbehälter 8 über eine Leitung 4b zugeführt. Die Konzentration der Laugen-Lösung steigt während des Betriebs der Elektrolysezelle koninuierlich an. Diese Lösung wird von der Pumpe 1b über eine Leitung 7b wieder angesaugt.

Ebenfalls parallel hierzu wird je nach Beobachtungszeitpunkt eine mehr oder weniger konzentrierte Säure 19, vorzugsweise Salzsäure mit Hilfe einer Pumpe 1c über eine Leitung 2c durch die Elektrolysezelle 3 gefördert. Beim Durchgang durch die Zelle wird die Säure in der Lösung etwas angereichert. Diese angereicherte Lösung verläßt die Zelle und wird einem Säurebehälter 9 über eine Leitung 4c zugeführt. Die Konzentration der Säure-Lösung steigt während des Betriebs der Elektrolysezelle kontinuierlich an. Die Lösung wird von der Pumpe 1c über die Leitung 7c wieder angesaugt.

Die als Anolyt dienende, bevorzugt verwendete Schwefelsäure 20 wird mit Hilfe einer Pumpe 1d über eine Leitung 2d durch die Zelle 3 gefördert. Beim Durchgang durch die Zelle bleibt die Konzentration der Lösung konstant. Über eine Leitung 4d wird sie einem Anolytvorratsbehälter 10 zugeführt und über eine Leitung 7d von der Pumpe 1d abgesaugt.

In dem Katholytkreis, der bevorzugt mit dem Laugenkreis 1b, 2b, 4b, 8 und 7b identisch ist, befindet sich eine Entgasungsvorrichtung 11a, mit deren Hilfe das an der Kathode 22 gebildete Wasserstoffgas aus der Kathodenkammer 24 entfernt wird. Im Anolytkreis 1d, 2d, 4d, 10 und 7d befindet sich eine Entgasungsvorrichtung 11b, mit deren Hilfe das an der Anode 21 gebildete Sauerstoffgas aus der Anodenkammer 23 entfernt wird. Die beiden Gasströme werden über Leitungen 12a (Wasserstoff) und 12b (Sauerstoff), einem Katalysator 13 (bevorzugt ein Feststoffkatalysator zur Knallgasverbrennung) zugeführt. Über eine Leitung 14 verläßt das Reaktionsprodukt Wasser das Katalysatorgehäuse 15.

Hat die Lauge 18 im Laugenbehälter 8 eine bestimmte, mit einer Leitfähigkeitsmeßvorrichtung 16 gemessene Leitfähigkeit erreicht, gilt die Sollkonzentration der Regenerierlauge 18 und der Regeneriersäure 19 als erreicht. Von gewissen Schwankungen abgesehen, ist die erreichte Säuren- und Laugenkonzentration in derartigen Elektrolysezellen zwangsläufig immer gleich groß. Der Strom zwischen der Anode 21 und der Kathode 22 wird nun abgeschaltet.

Ließe man die verschiedenen Lösungen unterschiedlicher Konzentration in den Kammern der Elektrolysezelle 3 stehen, so würde mittels Diffusion ein Konzentrationsausgleich der verschiedenen Ionen durch die Ionenaustauschermembranen hindurch beginnen. Die Folge hiervon wäre eine gegenseitige Verunreinigung der Lösungen. Daher werden zeitgleich mit der Unterbrechung des Elektrodenstromes die Pumpen 1a - 1d abgeschaltet. Die Vorratsbehälter 5, 8, 9 und 10 sind bezüglich der Elektrolysezelle derartig angeordnet, daß die Lösungen aus den Kammern der Schwerkraft folgend, nach dem Prinzip der kommunizierenden Röhren, in die Vorratsbehälter 5, 8, 9 und 10 strömen. Der Flüssigkeitsspiegel der Salzlösung 17 steigt im Salzbehälter 5 von einem ersten Niveau 25 auf ein zweites Niveau 26. Dieses zweite Niveau stellt sich auch in der Leitung 2a ein. Der Flüssigkeitsspiegel der Regeneriersäure 19 steigt im Säurebehälter vom Niveau 27 auf das Niveau 28. Dieses Niveau stellt sich auch in der Leitung 2c ein. Der Flüssigkeitsspiegel des Anolytes 20 im Behälter 10 steigt vom Niveau 29 auf das Niveau 30. Dieses Niveau stellt sich auch in der Leitung 2d ein. Der Flüssigkeitsspiegel der Regenerierlauge 18 im Behälter 8 steigt vom Niveau 31 auf das Niveau 32. Dieses Niveau stellt sich auch in der Leitung 2d ein.

Die erfindungsgemäße Klein-Anlage weist somit eine Vorrichtung zur automatischen Entleerung der Kammern 23, 24 bzw. 62, 64, 69, 71 auf, die die Kammern selbsttätig entleert, wenn der Elektrodenstrom in der Elektrolysezelle 3 unterbrochen ist. Dadurch wird eine gegenseitige Verunreinigung der in der Zelle befindlichen Lösungen aufgrund von Diffusion und Konzentrationsausgleichen der verschiedenen Ionen durch die Ionenaustauschmembranen hindurch bei Unterbrechung des Elektrodenstromes auf einfache Weise, aber gleichwohl sicher verhindert.

Das Feststoffsalz 6 im Behälter 5 wird naturgemäß mit der Betriebsdauer immer weniger und muß entsprechend nachgefüllt (Pfeil 33) werden.

Haben die Regenerierlösungen 18 und 19 ihre Sollkonzentration erreicht, dann stehen sie für die Regeneration einer Anionenaustauscher- bzw. einer Kationenaustauschersäule zur Verfügung. Ein Ventil 34 wird geöffnet und die Regeneriersäure strömt (im Gleich- oder Gegenstromverfahren) über eine Leitung 35 durch das erschöpfte Kationenaustauschermaterial 36 im Kationenaustauscherbehälter 37. Im Säurebehälter 9 kann der Flüssigkeitsspiegel jedoch nur bis auf ein Niveau 38 absinken, da der Auslaß 39 so angeordnet ist, daß immer eine bestimmte Restmenge an Regeneriersäure im Säurebehälter 9 verbleibt. Parallel hierzu wird ein Ventil 40 geöffnet und die Regenerierlauge 18 strömt (im Gleich- oder Gegenstromverfahren) über eine Leitung 41 durch das erschöpfte Anionenaustauschermaterial 42 im Anionenaustauscherbehälter 43. Im Laugenbehälter 8 kann der Flüssigkeitsspiegel jedoch ebenfalls nur bis auf ein Niveau 44 absinken, da der Auslaß 45 so angeordnet ist, daß immer eine bestimmte Restmenge an Regenerierlauge im Laugenbehälter 8 verbleibt.

Die verbrauchten Regenerierlösungen verlassen den Kationenaustauscherbehälter 37 über eine Leitung 46 und den Anionenaustauscherbehälter 43 über eine Leitung 47 und vereinigen sich in einer gemeinsamen Leitung 48 - welche auch z.B. ein Mischbehälter sein kann - und gelangen so sich gegenseitig neutralisierend in den Ablauf 60, da die eingesetzten sauren und alkalischen Regeneriermittelmengen gleich groß sind, und die Regeneration des Anionen- und des Kationenaustauschers bevorzugt zeitgleich erfolgt. Nach erfolgtem Durchlauf der Regeneriermittel - eventuelle weitere Regenerationsschritte wie z.B. Nachwaschen, Rückspülen oder Erstfiltrat sind hier nicht dargestellt oder beschrieben - werden die Ventile 34 und 40 geschlossen und die Behälter 8 und 9 über eine Leitung 53 und Ventile 51 und 52 mit entsalztem Wasser wieder bis zu einer Sollmarke 28 bzw. 32 befüllt.

Dieses entsalzte Wasser kann entweder, nachdem die Regeneration komplett beendet ist, aus den Ionenaustauscherbehältern 37 und 43 gewonnen werden oder über die alternativ (pendelnd) zu den Behältern 37, 43 betriebenen Kationenaustauscherbehälter 49 und Anionenaustauscherbehälter 50. Produktwasser 55 kann über eine Leitung 54 entnommen werden, während Rohwasser 56 den mittels einer Leitung 58 verbundenen Behältern 49 und 50 über eine Leitung 57 zugeführt wird. Die Verrohrung der beispielhaft dargestellten Pendel-Ionenaustauscheranlage ist nicht vollständig ausgeführt.

Nachdem die Behälter 8 und 9 wieder befüllt sind, ist die Leitfähigkeit der Lösungen im Laugenbehälter 8 bzw. im Säurebehälter 9 sehr gut, da das nachgespeiste entsalzte Wasser sich mit den jeweiligen Regeneriermittelresten, die bestimmungsgemäß in den Behältern 8 und 9 zurückgeblieben sind, vermischt hat. Die Herstellung der Regeneriermittel kann nun wieder beginnen. Elektrischer Strom wird an die Elektroden angelegt und die Pumpen 1a - 1d wälzen die Lösungen wieder um. Die Säure- bzw. Laugenkonzentration in den Behältern 9 bzw. 8 steigt sukzessive an etc.

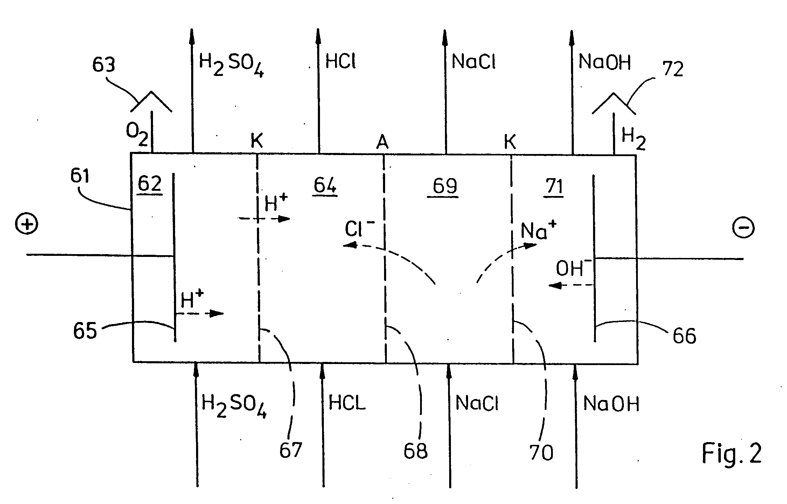

Eine für die erfindungsgemäße Anlage besonders geeignete Elektrolysezelle 61 ist, wie man der Figur 2 entnehmen kann, in vier Kammern aufgeteilt: Die Anodenkammer 62, welche z.B. mit verdünnter Schwefelsäure als Elektrolyt zur Verbesserung der Leitfähigkeit befüllt ist.

Das an der Anode durch die elektrolytische Wasserspaltung entstehende Sauerstoffgas wird über die Entlüftungsvorrichtung 63 aus der Kammer entfernt. Besonders vorteilhaft ist es, wenn die Anodenkammer von der im (nicht dargestellten) Kreis geführten Schwefelsäure durchströmt und damit gespült wird. Hierdurch erfolgt ein besserer Konzentrationsausgleich innerhalb der Kammer und die an der Anode 65 gebildeten Gasbläschen werden leichter weggespült. Die Entlüftungsvorrichtung 63 kann dann bevorzugterweise in diesen "Anodenkammerkreis" integriert werden.

In der Säurekammer 64 und im nicht dargestellten Säurekreis wird HCl aufkonzentriert. Durch die zwischen der Anode 65 und der Kathode 66 angelegte Spannung werden die an der Anode gebildeten H⁺-Ionen durch die Kationenaustauschermembrane 67 in die Säurekammer transportiert ebenso wie die Cl⁻-Ionen aus der Solekammer 69 durch die Anionenaustauschermembrane 68. Die Säurekammer 64 wird von der im Säurekreis zirkulierenden Salzsäure durchströmt. Die Konzentration dieser Salzsäure nimmt beim Durchgang durch die Säurekammer kontinuierlich zu.

Gleichzeitig nimmt die Konzentration in der Solekammer 69 ab, wenn kein NaCl nachdosiert wird. Die Chlorid-Ionen werden, wie bereits beschrieben, in die Säurekammer transportiert. Gleichzeitig wandern die Na⁺-Ionen durch die Kationenaustauschermembrane 70 in die Kathodenkammer 71. Dort entsteht aus den Natriumionen zusammen mit den an der Kathode 66 durch die Wasserspaltung gebildeten OH⁻-Ionen eine Natriumhydroxid-Lösung. Über die Entlüftungsvorrichtung 72 wird das an der Kathode gebildete Wasserstoffgas abgeführt. Der durch die Solekammer 69 geführte Solestrom wird über den nicht dargestellten Solekreis zirkuliert, ebenso wie der Laugenstrom durch die Kathodenkammer über den (nicht dargestellten) Laugenkreis zirkuliert wird. In diesen Laugenkreis kann auch die Entlüftungsvorrichtung 72 integriert werden.

Wie bereits ausgeführt, wird als zu spaltendes Salz bevorzugt Natriumchlorid verwendet. Dies ist im Handel (z.B. für die Regeneration von Enthärtungsanlagen) überall und preisgünstig in der erforderlichen Qualität verfügbar. Natürlich kann alternativ auch ein anderes geeignetes Salz verwendet werden, z.B. Na₂ So₄, KCl etc. Bei der Verwendung von Alkalichlorid (z.B. NaCl) als zu spaltendes Salz ist die in der Erfindung vorgestellte Anodenkammer 62, die von der Säurekammer 64 durch eine Kationenaustauschermembrane 67 getrennt ist, von besonderer Bedeutung: Sie verhindert, daß die im Säurekreis angereicherten Cl⁻-Ionen mit der Anode 65 in Kontakt kommen. Dort würden sie zu Cl₂ oxidiert. Dieses Chlor wirkt schädigend auf das Ionenaustauschermembran-Material, ist giftig, geruchsintensiv und seine Entstehung wäre schädlich für die Produktausbeute - es sollen ja H⁺-Ionen an der Anode entstehen. Die Entstehung von Chlor muß daher verhindert werden. Dies läßt sich mit der vorgestellten Erfindung auf überraschend einfache und preisgünstige Weise - trotz eines guten Zellenwirkungsgrades - erreichen.

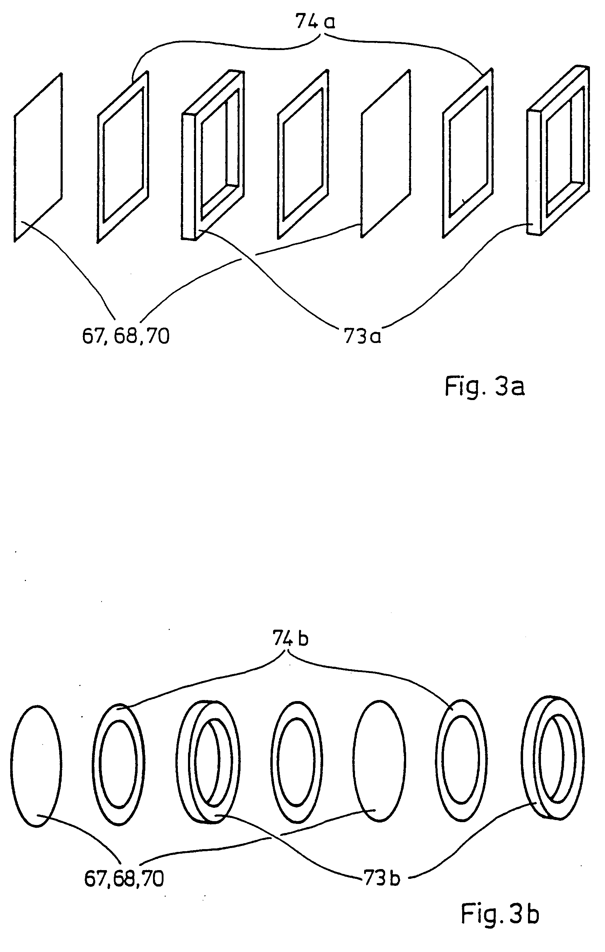

In der Figur 3a sind Rähmchen 63a, welche als abstandhalter zwischen den Membranen 67, 68, 70 dienen und die einzelnen Kammern anch außen hin begrenzen, in der üblichen rechteckigen Form dargestellt. Ebenso die Membranen und die Dichtungsgummis 74a.

Besonders vorteilhaft ist jedoch die in Figur 3b dargestellte Variante mit zylindrischer Kammerform, also kreisringförmiger Rähmchen 73b und Dichtungen 74b. Natürlich können diese Rähmchen 73a und 73b auch zusammen mit den Dichtungen 74a und 74b als ein Stück gefertigt werden.

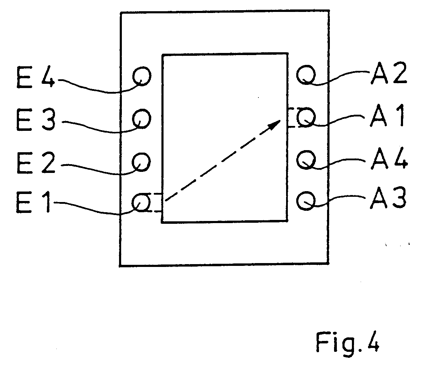

In der Figur 4 ist beispielhaft ein Rähmchen von der Membranseite her dargestellt, in das als besonders bevorzugte Ausführungsform die Zu- und Ableitungskanäle E1 - E4 bzw. A1 - A4 der einzelnen Kammern integriert sind. Man erreicht hierdurch, daß alle Anschlüsse auf einer Seite der Elektrolysezelle z.B. der Endplatte 75 ausgebildet werden können.

Die Membranquerschnittsfläche ist bevorzugt 0,1 bis 10 dm² und besonders bevorzugt 0,5 bis 2 dm² groß.

## Patentansprüche

1. Klein-Anlage zur Erzeugung von vollentsalztem (VE-)Wasser in einer Volumenmenge von etwa 20 m³/Woche, vorzugsweise weniger als 5 m³/Woche, die jeweils mindestens einen harzgefüllten Kationenaustauscherbehälter und einen harzgefüllten Anionenaustauscherbehälter aufweist, wobei eine Einrichtung zum Regenerieren des Kationenaustauscherharzes mit einer Säure und des Anionenaustauscherharzes mit einer Lauge vorgesehen ist,
dadurch gekennzeichnet,
daß die Einrichtung zum Regenerieren der Ionenaustauscherharze (36, 42) eine Elektrolysezelle (3) enthält, in der durch elektrolytische Aufspaltung von Salzsole (17) gleichzeitig die zum Regenerieren benötigte Säure (19) und Lauge (18) hergestellt werden kann.

2. Vorrichtung nach Anspruch 1, dadurch gekennzeichnet, daß die Elektrolysezelle (3) eine Soleabführungsleitung (4a) zum Abführen von in der Zelle behandelter Salzsole sowie eine Solezufuhrleitung (2a, 7a) zum Zuführen von frischer Salzsole in die Zelle aufweist, wobei die Soleabführungsleitung (4a) mit der Solezufuhrleitung (2a, 7a) über eine Einrichtung zur Nachschärfung der Salzsole verbunden ist, in der die Konzentration der in die Solezufuhrleitung (2a, 7a) eingeleiteten Salzsole auf einem bestimmten, vorzugsweise vorgebbaren Wert gehalten werden kann.

3. Vorrichtung nach Anspruch 2, dadurch gekennzeichnet, daß die Einrichtung zur Nachschärfung der Salzsole einen Solebehälter (5) umfaßt, in den einerseits die Soleabführungsleitung (4a), andererseits die Solezufuhrleitung (7a) mündet, und in dem Feststoffsalz (6) derart angeordnet ist, daß die aus der Elektrolysezelle (3) durch die Soleabführungsleitung (4a) in den Solebehälter (5) eingeleitete, geringfügig verarmte Salzsole mit dem Feststoffsalz (6) in Berührung kommt und mit einer höheren Salzkonzentration den Solebehälter (5) über die Solezufuhrleitung (7a) verlassen kann.

4. Vorrichtung nach Anspruch 2, dadurch gekennzeichnet, daß die Soleabführungsleitung (4a) direkt in die Solezufuhrleitung (2a, 7a) mündet, und daß die Einrichtung zur Nachschärfung der Salzsole einen Solebehälter (5) mit konzentrierter Salzsole (17) umfaßt, aus dem über eine Zuleitung ständig eine bestimmte Menge Salz in die Solezufuhrleitung (2a, 7a) eindiffundieren kann.

5. Vorrichtung nach einem der vorhergehenden Ansprüche, dadurch gekennzeichnet, daß die Einrichtung zum Regenerieren der Ionenaustauscherharze (36, 42) einen Säurebehälter (9) und einen Laugenbehälter (8) aufweist, in die angereicherte Säure bzw. Lauge aus der Elektrolysezelle (3) eingeleitet und aus denen weiter anzureichernde Säure (19) bzw. Lauge (18) in die Elektrolysezelle (3) abgeführt werden kann, und daß der Säurebehälter (9) und der Laugenbehälter (8) jeweils eine Ablaßleitung (35 bzw. 41) aufweisen, durch die eine Verbindung zum Kationenaustauscherbehälter (37, 49) bzw. zum Anionenaustauscherbehälter (43, 50) hergestellt werden kann, wobei Auslässe (39, 45) so angeordnet sind, daß beim Ablassen von Säure (19) bzw. Lauge (18) jeweils eine bestimmte Restmenge zwangsweise im Säurebehälter (9) bzw. im Laugenbehälter (8) zurückbleibt.

6. Vorrichtung nach Anspruch 5, dadurch gekennzeichnet, daß die Auslässe (39, 45) jeweils mit vertikalem Abstand vom Behälterboden des Säure- bzw. Laugenbehälters (19 bzw. 18) angeordnet sind.

7. Vorrichtung nach Anspruch 5, dadurch gekennzeichnet, daß im Bereich des Behälterbodens des Säure- und des Laugenbehälters (19 bzw. 18) nicht entleerbare Vertiefungen angebracht sind.

8. Vorrichtung nach einem der vorhergehenden Ansprüche, dadurch gekennzeichnet, daß in der Einrichtung zum Regenerieren der Ionenaustauscherharze (36, 42) Meßvorrichtungen (16) zur Messung der Konzentration der in der Elektrolysezelle (3) erzeugten bzw. angereicherten Säure und/oder Lauge vorzugsweise aufgrund der elektrischen Leitfähigkeit vorgesehen sind.

9. Vorrichtung nach Anspruch 8, dadurch gekennzeichnet, daß eine vorzugsweise elektronische Steuereinrichtung vorgesehen ist, die aufgrund der Meßsignale der Meßvorrichtung (16) bei Erreichen eines vorgebbaren Konzentrationswertes der Säure und/oder Lauge ein Umpumpen der Salzsole, Säure und Lauge durch die Elektrolysezelle (3) abstoppt.

10. Vorrichtung nach Anspruch 9, dadurch gekennzeichnet, daß die Elektrolysezelle (3) so angeordnet ist, daß nach dem Abstoppen des Umpumpens der Salzsole, Säuren und Lauge ein Teil der Flüssigkeiten, vorzugsweise jedoch alle aus der Elektrolysezelle (3) in die entsprechenden Zufuhrleitungen (2a, 2b, 2c, 2d) ablaufen.

11. Vorrichtung nach einem der vorhergehenden Ansprüche, dadurch gekennzeichnet, daß ein Feststoffkatalysator (13) vorgesehen ist, dem die bei der Salzaufspaltung in der Elektrolysezelle (3) an den Elektroden (21, 22) entstehenden Wasserstoff- und Sauerstoffgase zur katalytischen Verbrennung zugeführt werden können.

12. Vorrichtung nach einem der vorhergehenden Ansprüche, dadurch gekennzeichnet, daß am Boden der Kationenaustauscherbehälter (37, 49) und der Anionenaustauscherbehälter (43, 50) Ausflußleitungen (46 bzw. 47) vorgesehen sind, durch die nach dem Regenerieren der Ionenaustauscherharze (36, 42) die verbrauchte Säure bzw. Lauge abfließen kann, wobei sämtliche Ausflußleitungen (46, 47) zusammengeführt sind.

13. Vorrichtung nach Anspruch 12, dadurch gekennzeichnet, daß die Ausflußleitungen (46, 47) in eine gemeinsame Leitung (48) größeren Querschnitts und/oder in einen Pufferbehälter (60) münden.

14. Vorrichtung nach einem der vorhergehenden Ansprüche, dadurch gekennzeichnet, daß die Elektrolysezelle (61) Ionenaustauschermembranen (67, 68, 70) aufweist, die die Elektrolysezelle (61) in 4 separate Kammern (62, 64, 69, 71) trennen, wobei eine der Kammern eine mit einem Elektrolyten gefüllte Anodenkammer (62) ist, von einer ihr benachbarten Säurekammer (64), in der Produktsäure aufkonzentriert wird, durch eine Kationenaustauschermembrane (67) getrennt ist und diese Säurekammer (64) auf ihrer anderen Seite mit einer Anionenaustauschermembrane (68) von einer an sie angrenzenden Solekammer (69), die von der das zu spaltende Salz enthaltenden Lösung durchströmt wird, getrennt ist, wobei die Solekammer (69) wiederum auf ihrer anderen Seite durch eine Kationenaustauschermembrane (70) von einer Kathodenkammer (71) getrennt ist, in der Produktlauge aufkonzentriert wird.

15. Vorrichtung nach Anspruch 14, dadurch gekennzeichnet, daß die Leitfähigkeit der Lösungen in den einzelnen Kammern (62, 64, 69, 71) der Elektrolysezelle (61) so gut ist, daß auf die Einbringung von Ionenaustauscherharz in eine oder mehrere Kammern (62, 64, 69, 71) zur Leitfähigkeitsverbesserung verzichtet werden kann.

16. Vorrichtung nach Anspruch 14, dadurch gekennzeichnet, daß die Einbringung von Ionenaustauscherharz in die Kammern (62, 64, 69, 71) zur Leitfähigkeitsverbesserung möglich ist.

17. Vorrichtung nach einem der Ansprüche 14 bis 16, dadurch gekennzeichnet, daß die Anodenkammer (62) und die Kathodenkammer (71) eine Entlüftungsvorrichtung (63 bzw. 72) für das als Elektrodenreaktion bei der Wasserspaltung entstehende Wasserstoff- und Sauerstoffgas aufweisen, diese Entlüftungsvorrichtungen (63, 72) jedoch auch im Anodenkreis bzw. im Laugenkreis integriert sein können.

18. Vorrichtung nach einem der Ansprüche 14 bis 17, dadurch gekennzeichnet, daß die Anode aus platiniertem Titan-Material, insbesondere einem platinierten Titandraht besteht.

19. Vorrichtung nach einem der Ansprüche 14 bis 18, dadurch gekennzeichnet, daß Rähmchen (73a, 74a), welche als Abstandshalter für die Membranen dienen und somit die Zellenkammern nach außenhin begrenzen, einen rechteckigen Raum begrenzen.

20. Vorrichtung nach einem der Ansprüche 14 bis 18, dadurch gekennzeichnet, daß Rähmchen (73b, 74b), welche als Abstandshalter für die Membranen dienen und somit die Zellenkammern nach außenhin begrenzen, einen zylindrischen Raum begrenzen.

21. Vorrichtung nach einem der Ansprüche 19 oder 20, dadurch gekennzeichnet, daß die Zu- und Ableitungen (E1 bis E4 und A1 bis A4) der einzelnen Kammern in den Rähmchen integriert sind.

22. Verfahren zum Betrieb einer Vorrichtung nach einem der vorhergehenden Ansprüche, dadurch gekennzeichnet, daß die der Elektrolysezelle (3) zugeführte Salzsole auf einer wenigstens annährend konstanten Konzentration gehalten wird.

23. Verfahren nach Anspruch 22, dadurch gekennzeichnet, daß die in der Einrichtung zum Regenerieren der Ionenaustauscherharze (36, 42) erzeugte Säure (19) und Lauge (18) beim Durchführen einer Regeneration jeweils nur zum Teil durch die Harze geleitet wird, während eine bestimmte Restvolumenmenge an Säure und Lauge in der Einrichtung verbleibt.

24. Verfahren nach einem der Ansprüche 22 oder 23, dadurch gekennzeichnet, daß bei Erreichen einer vorgegebenen Sollkonzentration der in der Elektrolysezelle (3) erzeugten Säure und/oder Lauge die Elektrolysezelle (3) zumindest teilweise, vorzugsweise vollständig von sämtlichen Flüssigkeiten entleert wird.

25. Verfahren nach einem der Ansprüche 22 bis 24, dadurch gekennzeichnet, daß das bei der Salzaufspaltung in der Elektrolysezelle (3) entstehende Wasserstoff- und Sauerstoffgas katalytisch verbrannt wird.

26. Verfahren nach einem der Ansprüche 22 bis 25, dadurch gekennzeichnet, daß die Regeneration des Kationenaustauscherharzes (36) und des Anionenaustauscherharzes (42) gleichzeitig und mit Säure (19) und Lauge (18) von gleicher Konzentration durchgeführt wird, wobei die verbrauchten Regeneriermittel nach Durchlaufen durch die Harze zusammengeführt und vermischt werden.
